(19) Europäisches Patentamt / European Patent Office / Office européen des brevets

(11) **EP 3 837 509 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **19753075.1**

(22) Anmeldetag: **13.08.2019**

(51) Internationale Patentklassifikation (IPC):
*G01F 23/284* (2006.01)    *G01S 13/88* (2006.01)
*G01F 23/00* (2022.01)    *G01F 23/80* (2022.01)
*G01S 7/40* (2006.01)    *G01S 7/41* (2006.01)
*G01S 13/08* (2006.01)

(52) Gemeinsame Patentklassifikation (CPC):
**G01F 23/284; G01F 23/804; G01S 7/4021; G01S 7/411; G01S 7/414; G01S 13/88;** G01S 13/08

(86) Internationale Anmeldenummer:
**PCT/EP2019/071654**

(87) Internationale Veröffentlichungsnummer:
**WO 2020/035472 (20.02.2020 Gazette 2020/08)**

(54) **FÜLLSTANDSMESSGERÄT**

FILL LEVEL MEASURING DEVICE

DISPOSITIF DE MESURE DE NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2018   DE 102018119976**

(43) Veröffentlichungstag der Anmeldung:
**23.06.2021   Patentblatt 2021/25**

(73) Patentinhaber: **Endress+Hauser SE+Co. KG**
**79689 Maulburg (DE)**

(72) Erfinder: **GAIS, Jürgen**
**79576 Weil am Rhein (DE)**

(74) Vertreter: **Koslowski, Christine Adelheid**
**Endress+Hauser Group Services (Deutschland) AG+Co. KG**
**Colmarer Straße 6**
**79576 Weil am Rhein (DE)**

(56) Entgegenhaltungen:
**US-A1- 2007 194 799    US-A1- 2015 192 449**

**Beschreibung**

Die Erfindung betrifft ein Füllstandsmessgerät zur Messung eines in einem Behälter befindlichen Füllgutes sowie ein Verfahren zu dessen Betrieb.

In der Prozessautomatisierungstechnik werden Feldgeräte eingesetzt, die zur Erfassung oder zur Beeinflussung von Prozessvariablen dienen. Zur Erfassung von Prozessvariablen werden Sensoren eingesetzt, die beispielsweise in Füllstandsmessgeräten, Durchflussmessgeräten, Druck- und Temperaturmessgeräten, pH-Redoxpotential-Messgeräten, Leitfähigkeitsmessgeräten, oder vergleichbaren Messgeräten zum Einsatz kommen. Sie erfassen die entsprechenden Prozessvariablen, wie Füllstand, Durchfluss, Druck, Temperatur, pH-Wert, Redoxpotential oder Leitfähigkeit. Verschiedenste solcher Feldgeräte-Typen werden von der Firma Endress + Hauser hergestellt und vertrieben.

Zur Füllstandsmessung von Füllgütern in Behältern haben sich Radar-basierte Messverfahren etabliert, da sie robust und wartungsarm sind. Dabei werden unter dem Begriff "*Behälter*" im Rahmen der Erfindung auch nichtabgeschlossene Behältnisse, wie beispielsweise Becken, Seen oder fließende Gewässer verstanden. Ein zentraler Vorteil Radar-basierter Messverfahren besteht in der Fähigkeit, den Füllstand quasi kontinuierlich messen zu können (im Kontext dieser Patentanmeldung beziehen sich der Begriff "*Radar*" auf Signale bzw. elektromagnetische Wellen mit Frequenzen zwischen 0.03 GHz und 300 GHz).

Im Fall von Radar-basierter Füllstandsmessung bildet das Pulslaufzeit-Messprinzip ein etabliertes Messprinzip. Hierbei werden Mikrowellenpulse als Messsignale zyklisch in Richtung des Füllguts ausgesandt und die Laufzeit bis zum Empfang des entsprechenden Echo-Pulses gemessen. Auf Basis dieses Messprinzips können Füllstandsmessgeräte mit vergleichsweise geringem schaltungstechnischem Aufwand realisiert werden. Ein Radar-basiertes Füllstandsmessgerät, welches nach dem Pulslaufzeit-Verfahren arbeitet, ist beispielsweise in der Offenlegungsschrift DE 10 2012 104 858 A1 beschrieben.

Sofern eine komplexere Schaltungstechnik in Kauf genommen werden kann, bietet sich zur Radar-basierten Füllstandsmessung auch FMCW (*"Frequency Modulated Continuous Wave"*) als Messprinzip an. Bezüglich eines typischen Aufbaus von FMCW-basierten Füllstandsmessgeräten sei exemplarisch auf die Offenlegungsschrift DE 10 2013 108 490 A1 verwiesen.

Das Messprinzip von FMCW- Radar basierten Entfernungsmessverfahren beruht darauf, ein Radar-basiertes Messsignal zwar kontinuierlich, jedoch mit modulierter Frequenz auszusenden. Dabei liegt die Frequenz des Messsignals in einem festgelegten Frequenzband im Bereich einer standarisierten Mittenfrequenz. Kennzeichnend für FMCW ist hierbei, dass die SendeFrequenz nicht konstant ist, sondern sich periodisch innerhalb des festgelegten Frequenzbandes ändert. Die zeitliche Änderung ist hierbei standardmäßig linear und weist eine Sägezahn- beziehungsweise DreiecksForm auf. Eine Sinus-förmige Änderung kann prinzipiell jedoch auch eingesetzt werden. Im Gegensatz zum Pulslaufzeit-Verfahren wird die Entfernung bzw. der Füllstand bei Implementierung des FMCW-Verfahrens auf Basis der instantanen Frequenzdifferenz zwischen dem aktuell empfangenen, reflektierten Echosignal und dem momentan ausgesendeten Messsignal bestimmt.

Neben frei abstrahlender Radar-Messung, bei der das Messsignal über eine Antenne abgestrahlt bzw. empfangen wird, existiert zudem die Variante des geführten Radars. Hierbei wird das das Messsignal über eine elektrisch leitfähige Sonde (bspw. ein Koaxial-Kabel oder einen Metallstab), die in den Behälter hinuntergelassen ist, geführt. Am Ort der Füllgutoberfläche wird in der Sonde das Echosignal erzeugt und entlang der Sonde gen Füllstandsmessgerät reflektiert. Bekannt ist diese Variante der Radar-basierten Füllstandsmessung auch unter dem Begriff "*TDR*" ("*Time Domain Reflectometry*"). Vorteilhaft an dieser Variante ist, dass aufgrund der geführten Signalabstrahlung weniger Leistung zum Betrieb des Füllstandsmessgerätes erforderlich ist.

Bei jedem der oben genannten Messprinzipien (Pulslaufzeit und FMCW; unabhängig von geführter oder freier Abstrahlung) wird zur Ermittlung des Füllstandes anhand des empfangenen, reflektierten Echosignals eine entsprechende Messkurve aufgezeichnet. Im Falle des Pulsradar-basierten Verfahrens wird die Messkurve aufgrund der hohen Pulsfrequenz durch Unterabtastung des reflektierten Echosignals erstellt. Dadurch bildet die Messkurve das eigentliche, reflektierte Echosignal zeitgedehnt ab. Bei Implementierung des FMCW-Verfahrens wird die Messkurve durch Mischen des momentan gesendeten Messsignals mit dem reflektierten Echosignal erstellt. Unabhängig vom Messprinzip spiegelt die Messkurve die Amplitude des reflektierten Echosignals in Abhängigkeit der Messdistanz wieder.

Der Füllstand wird aus der Messkurve durch Detektion und örtlicher Zuweisung des entsprechenden lokalen Maximums bestimmt. Um dieses Maximum zweifelsfrei erkennen zu können, ist es bereits bekannt, die Messkurve gegebenenfalls mittels eines geeigneten Filterverfahrens wie Mittelwert-, Maximalwert- oder Tiefpassfilterung zu glätten, um im Anschluss den Füllstand anhand der geglätteten Messkurve bestimmen zu können. Dabei bietet eine geringe Glättung den Vorteil, dass die Maxima örtlich besser aufgelöst werden können. Hierdurch lässt sich der Füllstand genauer bestimmen. Dies wird durch eine stärkere Glättung eingeschränkt. Allerdings sinkt durch eine stärkere Glättung die Fehlerbzw. Störanfälligkeit der Füllstandsmessung.

Eine Filterung der Messkurve ermöglicht jedoch nicht die Erkennung bzw. die Ausblendung von statischen Störechos. Im Fall von frei abstrahlendem Radar können Störechos bspw. durch Einbauten im Behälter-Inneren hervorgerufen werden. Bei geführtem Radar können Störechos vor allem durch Füllgut-Ablagerungen an der Sonde hervorgerufen werden. Aufgrund dessen ist im Füllstandsmessgerät korrespondierend zur Messkurve eine Referenzkurve (auch unter dem Begriff "*Echo-Schwelle*" bekannt) hinterlegt, wie beispielsweise in der US-Veröffentlichung 2015/192449 A1 beschrieben ist. Überschreitet die Amplitude eines Maximums, das in der Messkurve lokalisiert wurde, nicht den zugehörigen Wert in der Referenzkurve, so wird dieses Maximum kategorisch nicht zur Bestimmung des Füllstandes herangezogen. Je nach Variante, in der die Füllstandsmessung ausgeführt wird, kann die Referenzkurve unterschiedlich definiert sein: Im einfachsten Fall ist sie als konstante Funktion über den Füllstands-Bereich definiert. Da die Amplitude des Echosignals jedoch in der Praxis mit sinkendem Füllstand abnimmt, ist die Referenzkurve insbesondere bei geführtem Radar oftmals als abfallende Funktion, bspw. als abfallende e-Funktion oder als abfallende gebrochen-rationale Funktion definiert. Bei frei abstrahlendem Radar kann die Referenzkurve auch auf einer Referenzmessung bei leerem Behälter basieren. Allgemein hängt die Amplitude des empfangenen Echosignals auch von der Art bzw. dem Dielektrizitätswert des Füllgutes im Behälter ab. Daher kann, sofern der Dielektrizitätswert des Füllgutes unberücksichtigt bleibt oder sich ändert, die Lage bzw. der Versatz der Referenzkurve bezüglich der Amplitude falsch eingestellt sein. In der Folge wird entweder ein falscher oder gar kein Füllstandswert vom Füllstandsmessgerät ermittelt. Gerade bei Gefahrenstoff-artigen Füllgütern kann dies zu sicherheitskritischen Zuständen im Behälter führen.

Der Erfindung liegt daher die Aufgabe zugrunde, ein sicheres Füllstandsmessgerät bereitzustellen.

Die Erfindung löst diese Aufgabe durch ein Füllstandsmessgerät zur Radar-basierten Messung des Füllstandes eines in einem Behälter befindlichen Füllgutes. Es umfasst folgende Komponenten:

- Eine Mess-Einheit, die ausgelegt ist, den Dielektrizitätswert des Füllgutes zu bestimmen,
- eine Signalerzeugungs-Einheit, die ausgelegt ist, ein Radar-basiertes Messsignal in
- eine Antenne oder eine Sonde einzukoppeln, wobei die Antenne oder die Sonde so ausrichtbar ist, dass das Messsignal in Richtung des Füllgutes ausgesendet wird, und
- eine Auswerte-Einheit, die ausgelegt ist,

    ○ nach Reflektion des Sendesignals an der Oberfläche des Füllgutes, am Sonden-Ende oder am Behälterboden ein Echosignal über die Antenne bzw. die Sonde zu empfangen,
    ○ anhand von zumindest dem Echosignal eine Messkurve zu erstellen,
    ○ anhand eines Maximus der Messkurve den Füllstand zu bestimmen, sofern das Maximum einen korrespondierenden Wert der Referenzkurve übersteigt, und
    ○ einen Versatz und/oder einen ein Funktionstyp der Referenzkurve in Abhängigkeit des gemessenen Dielektrizitätswertes einzustellen, wobei die Mess-Einheit ausgelegt ist, den Dielektrizitätswert (DK) zu messen, indem die Mess-Einheiteinen Extremwert ($M_{min}$) der Messkurve ($E'_{HF}$), der in etwa einem vordefinierten Mindestfüllstand ($L_{min}$) entspricht, detektiert,- eine Verschiebung des Extremwertes ($AM_{min}$) bestimmt, sofern eine Füllstandsänderung (AL) detektiert wird, und- anhand der Verschiebung des Extremwertes ($AM_{min}$) und anhand der Füllstandsänderung (AL) den Dielektrizitätswert (DK) bestimmt.

Dabei definiert sich der Begriff "*Funktionstyp*" im Rahmen der Erfindung als diejenige Art an Datensatz, auf welcher die Referenzkurve basiert. Es kann sich bei dem Datensatz also bspw. um Wertepaare einer mathematischen Funktion, wie einer abklingenden e-Funktion oder eine gebrochen-rationalen Funktion handeln. Es kann sich jedoch auch um die Wertepaare einer Referenzmessung der Radar-basierten Füllstandsmessung, z. B. bei leerem Behälter bzw. bei unterschrittenem Mindestfüllstand, handeln.

Durch die erfindungsgemäße Auslegung des Füllstandsmessgerätes wird die Lage der Referenzkurve (auch bekannt als Echoschwelle) automatisch an den Dielektrizitätswert des Füllgutes und somit an die Reflektionsverhältnisse im Behälter angepasst. Hierdurch wird die Zuverlässigkeit des Füllstandsmessgerätes wesentlich erhöht. Somit entfällt eine etwaige manuelle Anpassung der Referenzkurve an die Reflektionsverhältnisse im Behälter. Vorteilhaft wirkt sich dies insbesondere aus, wenn der Behälter zu verschiedenen Zeitpunkten mit unterschiedlichen Füllgütern mit jeweils nicht näher bekannten Dielektrizitätswerten befüllt ist.

Im Rahmen der Erfindung wird unter dem Begriff "*Einheit*" eine elektronische Schaltung verstanden, die gemäß ihrem Einsatzzweck geeignet ausgelegt ist. Es kann sich also je nach Anforderung entweder um eine Analogschaltung zur Erzeugung bzw. Verarbeitung entsprechender analoger Signale handeln. Es kann sich jedoch auch um ein Programm in zusammenwirken mit einer (halbleiterbasierte) Digitalschaltung wie einem Rechenblock oder einen Speicher handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Füllstandsmessgerätes im Sinne der Erfindung potentiell auch auf einen gemeinsamen Speicher zurückgreifen bzw. mittels derselben Rechenschaltung betrieben werden.

Da die Intensität des reflektierten Sendesignals mit steigendem Dielektrizitätswert zunimmt, ist es vorteilhaft, wenn die Auswerte-Einheit des erfindungsgemäßen Füllstandsmessgerätes ausgelegt ist, den Versatz mit zunehmendem Dielektrizitätswert zu erhöhen. Dies kann im einfachsten Fall linear erfolgen. Jeder andere Zusammenhang, wie eine exponentielle oder logarithmische Erhöhung ist jedoch ebenso denkbar.

Es wird somit bei dieser Auslegung der Effekt der imaginären Verschiebung des Sonden-End-Echos bzw. des Behälterboden-Echos in der Messkurve im Falle einer Änderung des Dielektrizitätswertes des Füllgutes genutzt. Vorteilhaft hieran ist unter anderem, dass das Füllstandsmessgerät bzw. die Mess-Einheit keinen separaten Sensor zur Messung des Dielektrizitätswertes umfassen muss.

Im Rahmen der Erfindung ist es nicht fest vorgeschrieben, welchen Verlauf die Referenzkurve in Abhängigkeit des Füllstandes aufweisen muss. Vorteilhaft ist es, wenn die Referenzkurve als eine mit sinkendem Füllstand abnehmende Funktion bzw. Kurve in der Auswerte-Einheit implementiert ist, da die Intensität des reflektierten Sendesignals mit steigender Distanz zum Füllstandsmessgerät abnimmt. Dabei kann die Distanz-abhängige Abnahme beispielsweise mittels Implementierung der Referenzkurve als abklingende e-Funktion oder abklingende gebrochen-rationale Funktion realisiert werden. In diesem Fall ist die Referenzkurve als ein insbesondere gebrochen rationaler Funktionstyp oder als ein exponentieller Funktionstyp in der Auswerte-Einheit zu implementieren.

Korrespondierend zum erfindungsgemäßen Füllstandsmessgerät wird die Aufgabe, die der Erfindung zugrunde liegt, auch durch ein Verfahren zur Radar-basierten Messung des Füllstandes eines in einem Behälter befindlichen Mediums mittels eines Füllstandsmessgerätes nach einer der zuvor genannten Ausführungsvarianten gelöst. Dementsprechend umfasst das Verfahren folgende Verfahrensschritte:

- Messung eines Dielektrizitätswertes des Füllgutes,
- Aussenden eines Radar-basierten Messsignals in Richtung des Füllgutes,
- Empfang eines Echosignals nach Reflektion des Sendesignals an der Oberfläche des Füllgutes, am Sonden-Ende oder am Behälterboden,
- Erstellung einer Messkurve anhand von zumindest dem Echosignal,
- Bestimmung des Füllstandes anhand eines Maximus der Messkurve bzw. anhand des korrespondierenden Punktes einer Referenzkurve, sofern das Maximum die vordefinierte Referenzkurve übersteigt.

Dabei wird der Versatz und/oder der Funktionstyp der Referenzkurve in Abhängigkeit des gemessenen Dielektrizitätswertes eingestellt.

Anhand der nachfolgenden Figuren wird die Erfindung näher erläutert. Es zeigt:

Fig. 1: Eine Anordnung eines geführten Radar-Füllstandsmessgerätes, und

Fig. 2: eine Messkurve mit einer hinterlegten Referenzkurve.

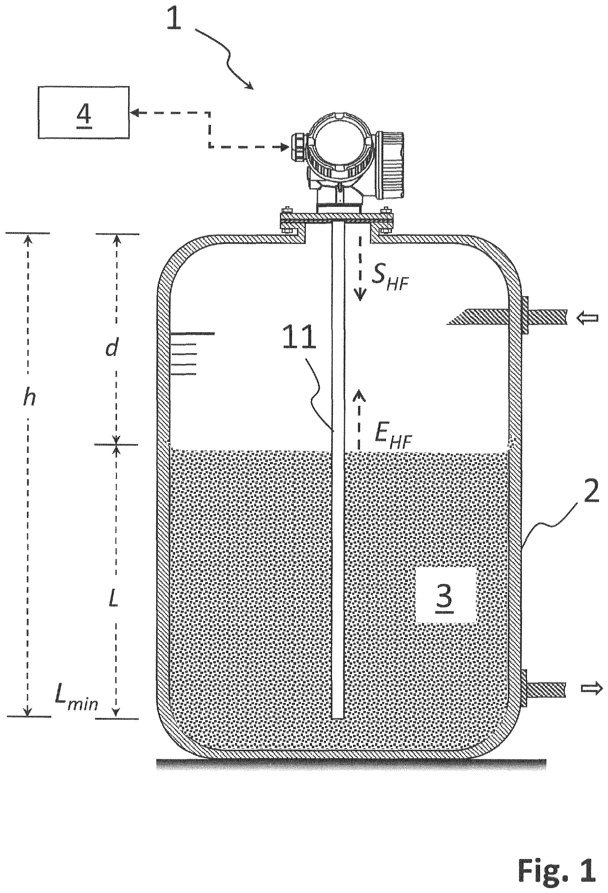

Zum grundsätzlichen Verständnis der Erfindung ist in Fig. 1 eine typische Anordnung eines geführten, Radar-basierten Füllstandsmessgerätes 1 an einem Behälter 2 gezeigt. In dem Behälter 2 befindet sich ein Füllgut 3, dessen Füllstand L durch das Füllstandsmessgerät 1 zu bestimmen ist. Dazu ist das Füllstandsmessgerät 1 oberhalb des maximal zulässigen Füllstands L am Behälter 2 angebracht.

In der Regel ist das Füllstandsmessgerät 1 über ein Bussystem, etwa "Ethernet", "PROFIBUS", "HART" oder "Wireless HART" mit einer übergeordneten Einheit 4, beispielsweise einem Prozessleitsystem oder einer dezentralen Datenbank verbunden. Hierüber können zum einen Informationen über den Betriebszustand des Füllstandsmessgerätes 1 kommuniziert werden. Über das Bussystem können aber auch Informationen über den Füllstand L übermittelt werden, um gegebenenfalls am Behälter 2 vorhandene Zuflüsse zu steuern.

Das in Fig. 1 dargestellte Füllstandsmessgerät 1 ist als geführtes Radar ausgelegt. Daher umfasst das Füllstandsmessgerät 1 eine elektrisch leitfähige Sonde 11. Dabei kann die Sonde 11 beispielsweise als metallischer Stab, metallisches Seil oder metallischer Hohlleiter ausgelegt sein. Die Sonde 11 ist so ausgerichtet, dass sie sich vom Füllstandsmessgerät 1 senkrecht hinab in den Behälter 2 erstreckt. Der Messbereich bzw. der minimal detektierbare Füllstand $L_{min}$ definiert sich dementsprechend über die Länge h der Sonde 11 (bei einem frei abstrahlenden Füllstandsmessgerät 1 würde anstelle der Sonde 11 eine entsprechende Antenne eingesetzt, die in Richtung des Füllgutes 3 ausgerichtet ist; In diesem Fall entspräche der minimal detektierbare Füllstand $L_{min}$ dem Behälterboden).

Über die Sonde 11 sendet das Füllstandsmessgerät 1 ein Radar-basiertes Messsignal $S_{HF}$ in Richtung des Füllgutes 3 aus. Hierzu umfasst das Füllstandsmessgerät 1 eine entsprechende Signalerzeugungs-Einheit, die ausgelegt ist, das Radar-basiertes Messsignal $S_{HF}$ je nach implementiertem Messprinzip (FMCW oder Pulslaufzeit-Verfahren) in die Sonde 11 einzukoppeln. Im Fall von FMCW kann die Signalerzeugungs-Einheit zur Erzeugung des Messsignals $S_{HF}$ auf einer PLL ("*Phase Locked Loop*") basieren, wobei die in etwa sägezahnförmige Frequenzänderung durch eine entsprechende Ansteuerung der PLL einstellbar ist. Beim Pulslaufzeit-Verfahren kann die Signalerzeugungs-Einheit zur Erzeugung des Messsignals $S_{HF}$ beispielsweise auf einem spannungsgesteuerten Oszillator (auch bekannt als "*VCO, Voltage Controlled Oscillator*") basieren, der entsprechend der gewünschten Pulsdauer bzw. dem gewünschten Puls-/Pausen-Verhältnis angesteuert wird.

Durch Reflektion des Messsignals $S_{HF}$ auf Höhe der Füllgut-Oberfläche wird ein entsprechendes Echosignal $E_{HF}$ erzeugt und in der Sonde 11 zurückgeleitet. Eine Auswerte-Einheit des Füllstandsmessgerätes 1 (nicht explizit dargestellt) empfängt das Echosignal $E_{HF}$ über die Sonde 11 nach einer korrespondierenden Laufzeit. Hierbei hängt die Laufzeit von der Entfernung d = h - L des Füllstandsmessgerätes 1 zur Füllgut-Oberfläche ab. Zur Ermittlung der Laufzeit bzw. der Entfernung d erstellt die Auswerte-Einheit eine Messkurve $E'_{HF}$, die auf dem Echosignal $E_{HF}$ basiert. Dabei hängt die Erstellung wiederum vom jeweiligen Messprinzip ab: Bei Implementierung des FMCW-Prinzips wird das empfangene Echosignal $E_{HF}$ bspw. mittels eines Mischers der Auswerte-Einheit mit dem momentan ausgesendeten Messsignal $S_{HF}$ gemischt. Aus der so genannten Differenz-Frequenz der resultierenden Mischsignals kann der Abstand d bzw. der Füllstand L ermittelt werden. Ein entsprechend ausgelegter Auswertungsblock der Auswerte-Einheit kann dabei das Mischsignal beispielsweise mittels einer FFT ("*Fast Fourier Transformation*") in die frequenzabhängige Messkurve $E'_{HF}$ überführen. Dabei spiegelt ein Maximum $M_L$ der Messkurve $E'_{HF}$ im Idealfall die Frequenz der resultierenden Mischsignals und somit den Abstand d zum Füllgut wieder.

Bei Implementierung des Pulslaufzeit-Verfahrens wird die Messkurve $E'_{HF}$ durch Unterabtastung des Echosignals $E_{HF}$ erstellt: Gängig ist es in diesem Fall, dass ein Abtast-Block der Auswerte-Einheit das pulsförmige Echosignal $E_{HF}$ mit einem wiederum pulsförmigen Abtastsignal (das bspw. mittels eines zweiten VCO's erzeugt wird) beaufschlagt, wobei die Puls-Rate des Abtastsignals gering von der Puls-Rate des Messsignals $S_{HF}$ bzw. des Echosignals $E_{HF}$ abweicht. Durch die Abtastung resultiert die Messkurve $E'_{HF}$ als zeitgedehntes Echosignal $E_{HF}$. In diesem Fall kann unter Idealbedingungen einem globalen Maximum $M_L$ der Messkurve $E'_{HF}$ direkt die Signallaufzeit und damit der Abstand d bzw. der Füllstand zugeordnet werden.

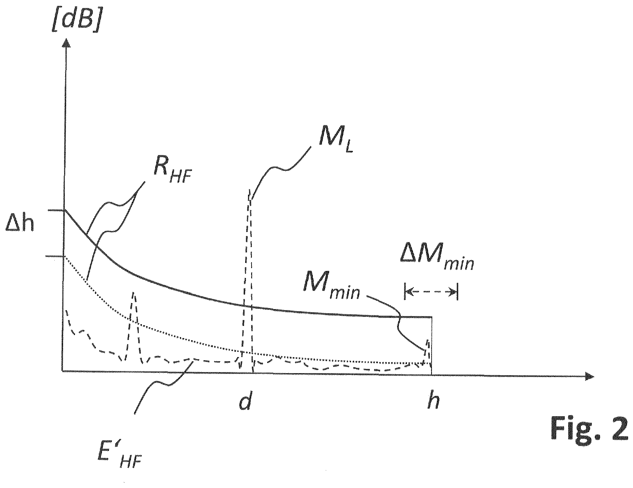

Eine schematische Messkurve $E'_{HF}$, welche die reale Situation bei dem in Fig. 1 dargestellten Behälters 2 widerspiegelt, ist in Fig. 2 dargestellt. Dabei kann die Messkurve $E'_{HF}$ sowohl mittels des FMCW-Verfahrens, als auch mittels des Pulslaufzeit-Verfahrens erstellt sein. In der dargestellten Messkurve $E'_{HF}$ zeigt sich, dass nicht nur die Füllgut-Oberfläche ein entsprechendes Maximum $M_L$ in der Messkurve $C_m$ erzeugt. Neben dem Maximum $M_L$, das durch die Füllgut-Oberfläche hervorgerufen wird, ist ein weiterer Extremwert $M_{min}$ zu erkennen, der durch das Ende der Sonde 11 hervorgerufen wird. Da das Sonden-Ende nicht geerdet ist, ist es als Maximum ausgebildet (Bei Erdung des Sonden-Endes wäre der Extremwert als Minimum ausgebildet). Bei frei abgestrahltem Messsignal $S_{HF}$ könnte ein entsprechendes Extremum durch den Boden des Behälters 2 hervorgerufen werden.

Auch durch Ablagerungen an der Sonde 11 können, wie in Fig. 2 angedeutet ist, weitere Maxima entstehen (Im Falle freier Abstrahlung könnte dies auch durch Einbauten im Inneren des Behälters 2, wie bspw. Zuleitungen hervorgerufen werden). Darüber hinaus können auch Mehrfachreflektionen innerhalb der Sonde 11 bzw. bei freier Abstrahlung innerhalb des Behälters 2 zu weiteren Maxima in der Messkurve $E'_{HF}$ führen.

Um trotz etwaiger Störechos dasjenige Maximum $M_L$, das der Füllgut-Oberfläche zugeordnet ist, korrekt bestimmen zu können, ist in der Auswerte-Einheit des Füllstandsmessgerätes 1 eine Referenzkurve $R_{HF}$ hinterlegt. Wie in Fig. 2 dargestellt, ist die Referenzkurve $R_{HF}$ ausgehend vom Füllstandsmessgerät 1 mindestens bis zum Sonden-Ende, also bis zum mindestdetektierbaren Füllstand $L_{min}$ definiert. Die Auswerte-Einheit nutzt die Referenzkurve $R_{HF}$ zum Abgleich mit der Messkurve $E'_{HF}$: Es werden von der Auswerte-Einheit lediglich diejenigen Maxima $M_L$ der Messkurve $E'_{HF}$ als potentielle Echos zur Füllstandsbestimmung herangezogen, die den korrespondieren Wert der Referenzkurve $R_{HF}$ überschreiten.

Wie in Fig. 2 zu sehen ist, kann es je nach Lage bzw. Versatz $\Delta h$ der Referenzkurve $R_{HF}$ eintreten, dass bei zu niedriger Einstellung des Versatzes $\Delta h$ versehentlich ein Störecho zur Füllstandsbestimmung herangezogen wird. Dabei handelt es sich bei dem Begriff "*Versatz $\Delta h$*" im Rahmen der Erfindung um die Verschiebung der Referenzkurve $R_{HF}$ entlang derjenigen Achse, die in der Messkurve $E'_{HF}$ die Signal-Stärke bzw. -Amplitude festlegt.

Bei zu hoher Einstellung des Versatzes $\Delta h$ könnte eventuell selbst das Maximum $M_L$ der Füllgut-Oberfläche unterdrückt werden, so dass überhaupt kein Füllstandswert L bestimmbar ist. Bei zu niedriger Einstellung des Versatzes $\Delta h$ könnte der Füllstand L fälschlicherweise auf Basis eines Störechos $M_{min}$ berechnet werden. Erfindungsgemäß stellt das Füllstandsmessgerät 1 den Versatz $\Delta h$ oder auch den Funktionstyp der Referenzkurve $R_{HF}$ daher selbstständig in Abhängigkeit des gemessenen Dielektrizitätswertes DK ein. Somit passt das Füllstandsmessgerät 1 die Referenzkurve $R_{HF}$ automatisch an das Füllgut 3 bzw. an die Reflektionsverhältnisse im Behälter 2 an. Hierdurch wird die Zuverlässigkeit der Füllstandsmessung wesentlich erhöht. Eine manuelle Anpassung an die Reflektionsverhältnisse im Behälter 2 durch einen Wartungstechniker wird hierdurch überflüssig.

Da sich der Anteil des reflektierten Echosignals $E_{HF}$ in Relation zum ausgesendeten Messsignal $S_{HF}$ proportional mit dem Dielektrizitätswert DK erhöht, ist die Auswerte-Einheit des Füllstandsmessgerätes 1 so ausgelegt, dass der Versatz $\Delta h$ mit zunehmendem Dielektrizitätswert DK linear erhöht wird. Die in Fig. 2 dargestellten Referenzkurve $R_{HF}$ nimmt mit sinkendem Füllstand L ab, da auch die Intensität des reflektierten Echosignals $E'_{HF}$ mit steigendem Abstand d abnimmt. Hierbei kann der Abfall der Referenzkurve $R_{HF}$ bspw. exponentiell oder auch gebrochen-rational implementiert sein.

Das in Fig. 1 dargestellte Füllstandsmessgerät 1 kann den Dielektrizitätswert DK beispielsweise bestimmen, indem die Mess-Einheit bei einem bekannten Füllstand L zunächst denjenigen Extremwert $M_{min}$ der Messkurve $E'_{HF}$, der dem Sonden-Ende entspricht, detektiert und als solchen zuordnet. Sobald sich der Füllstand L ändert, verschiebt sich der Extremwert $M_{min}$ in der Messkurve $E'_{HF}$. Der Grund hierfür ist, dass sich die Weglänge L des Messsignals $S_{HF}$ durch das Füllgut 3 ändert, wodurch sich aufgrund des DK-Wertes des Füllgutes 3 wiederum die Signal-Laufzeit bis zum Sonden-Ende ändert. Somit kann das Füllstandsmessgerät 1 die imaginäre Verschiebung des Extremwertes $\Delta M_{min}$ und die Änderung des Füllstandes L bestimmen, sofern eine Füllstandsänderung $\Delta L$ eintritt. Dementsprechend kann die Auswerte-Einheit anhand der Verschiebung des Extremwertes $\Delta M_{min}$ und anhand der Füllstandsänderung $\Delta L$ den Dielektrizitätswert DK anhand des physikalischen Zusammenhanges

$$DK \sim \left( c^{-1} - \frac{\Delta M_{min}}{\Delta L} \right)^2$$

bestimmen (c ist hierbei die Lichtgeschwindigkeit in Vakuum). Bei einem frei abstrahlendem Radar-basierenden Füllstandsmessgerät 1 könnte zur Bestimmung des Dielektrizitätswertes DK korrespondierend zum Sonden-Ende das Extremum des Behälterbodens in der Messkurve $E'_{HF}$ herangezogen werden. Vorteilhaft bei dieser Methode der Bestimmung des Dielektrizitätswertes DK des Füllgutes 3 ist, dass das Füllstandsmessgerät 1 keine externe Mess-Einheit zur Bestimmung des Dielektrizitätswertes DK erfordert.

**Bezugszeichenliste**

| | |
|---|---|
| 1 | Füllstandsmessgerät |
| 2 | Behälter |
| 3 | Füllgut |
| 4 | Übergeordnete Einheit |
| 11 | Sonde |
| DK | Dielektrizitätswert |
| d | Messdistanz |
| $E_{HF}$ | Echosignal |
| $E'_{HF}$ | Messkurve |
| h | Sonden-Länge |
| L | Füllstand |
| $L_{min}$ | Minimal detektierbarer Füllstand |
| $M_L$ | Maximum |
| $M_{min}$ | Extremum |
| $R_{HF}$ | Referenzkurve |
| $S_{HF}$ | Messsignal |
| $\Delta h$ | Versatz |
| $\Delta M_{min}$ | Verschiebung |

**Patentansprüche**

1. Füllstandsmessgerät zur Radar-basierten Messung des Füllstandes (L) eines in einem Behälter (2) befindlichen Füllgutes (3), folgende Komponenten umfassend:

- Eine Mess-Einheit, die ausgelegt ist, den Dielektrizitätswert (DK) des Füllgutes (3) zu bestimmen,
- eine Signalerzeugungs-Einheit, die ausgelegt ist, ein Radar-basiertes Messsignal ($S_{HF}$) in
- eine Antenne oder eine Sonde (11) einzukoppeln, wobei die Antenne oder die Sonde (11) so ausrichtbar ist, dass das Messsignal ($S_{HF}$) in Richtung des Füllgutes (3) ausgesendet wird, und
- eine Auswerte-Einheit, die ausgelegt ist,

  ∘ nach Reflektion des Sendesignals ($S_{HF}$) ein Echosignal ($E_{HF}$) über die Antenne bzw. die Sonde (11) zu empfangen,
  ∘ anhand von zumindest dem Echosignal ($E_{HF}$) eine Messkurve ($E'_{HF}$) zu erstellen,
  ∘ anhand eines Maximus ($M_L$) der Messkurve ($E'_{HF}$) den Füllstand (L) zu bestimmen, sofern das Maximum ($M_L$) den korrespondieren Wert einer vordefinierten Referenzkurve ($R_{HF}$) übersteigt, und
  ∘ einen Versatz ($\Delta h$) und/oder einen ein Funktionstyp der Referenzkurve ($R_{HF}$) in Abhängigkeit des gemessenen Dielektrizitätswertes (DK) einzustellen,

wobei die Mess-Einheit ausgelegt ist, den Dielektrizitätswert (DK) zu messen, indem die Mess-Einheit

- einen Extremwert ($M_{min}$) der Messkurve ($E'_{HF}$), der in etwa einem vordefinierten Mindestfüllstand ($L_{min}$) entspricht, detektiert,
- eine Verschiebung des Extremwertes ($\Delta M_{min}$) bestimmt, sofern eine Füllstandsänderung ($\Delta L$) detektiert wird, und
- anhand der Verschiebung des Extremwertes ($\Delta M_{min}$) und anhand der Füllstandsänderung ($\Delta L$) den Dielektrizitätswert (DK) bestimmt.

2. Füllstandsmessgerät nach Anspruch 1, wobei die Auswerte-Einheit ausgelegt ist, den Versatz ($\Delta h$) mit zunehmendem Dielektrizitätswert (DK) insbesondere linear zu erhöhen.

3. Füllstandsmessgerät nach einem der vorhergehenden Ansprüche, wobei die Referenzkurve ($R_{HF}$) als eine mit sinkendem Füllstand (L) fallende Funktion in der Auswerte-Einheit implementiert ist.

4. Füllstandsmessgerät nach einem der vorhergehenden Ansprüche, wobei die Referenzkurve ($R_{HF}$) als ein insbesondere gebrochen rationaler Funktionstyp oder als ein exponentieller Funktionstyp in der Auswerte-Einheit implementiert ist.

5. Füllstandsmessgerät nach einem der Ansprüche 1 bis 3, wobei die Referenzkurve ($R_{HF}$) als eine unabhängig vom Füllstand (L) konstante Funktion in der Auswerte-Einheit implementiert ist.

6. Verfahren zur Radar-basierten Messung des Füllstandes (L) eines in einem Behälter (2) befindlichen Mediums (3) mittels eines Füllstandsmessgerätes (1) nach einem der vorhergehenden Ansprüche,

folgende Verfahrensschritte umfassend:

- Messung eines Dielektrizitätswertes (DK) des Füllgutes (3),
- Aussenden eines Radar-basierten Messsignals ($S_{HF}$) in Richtung des Füllgutes (3),
- Empfang eines Echosignals ($E_{HF}$) nach Reflektion des Sendesignals ($S_{HF}$),
- Erstellung einer Messkurve ($E'_{HF}$) anhand von zumindest dem Echosignal ($E_{HF}$),
- Bestimmung des Füllstandes (L) anhand eines Maximus ($M_L$) der Messkurve ($E'_{HF}$), sofern das Maximum ($M_L$) eine vordefinierte Referenzkurve ($R_{HF}$) übersteigt,

wobei ein Versatz ($\Delta h$) und/oder ein Funktionstyp der Referenzkurve ($R_{HF}$) in Abhängigkeit des gemessenen Dielektrizitätswertes (DK) eingestellt wird.

**Claims**

1. Level transmitter for the radar-based measurement of the level (L) of a medium (3) located in a vessel (2), said transmitter comprising the following components:

- a measuring unit, which is designed to determine the dielectric constant (DC) of the medium (3),
- a signal generation unit, which is designed to couple a radar-based measuring signal ($S_{HF}$) into
- an antenna or a probe (11), wherein the antenna or the probe (11) can be aligned in such a way that the measuring signal ($S_{HF}$) is transmitted in the direction of the medium (3), and
- an evaluation unit, which is designed to

∘ receive an echo signal ($E_{HF}$) via the antenna or the probe (11) following the reflection of the transmission signal ($S_{HF}$),
∘ create a measuring curve ($E'_{HF}$) using at least the echo signal (EHF),
∘ determine the level (L) using a maximum ($M_L$) of the measuring curve ($E'_{HF}$) if the maximum ($M_L$) exceeds the corresponding value of a predefined reference curve ($R_{HF}$), and
∘ set an offset ($\Delta h$) and/or a function type of the reference curve ($R_{HF}$) as a function of the measured dielectric constant (DC),

wherein the measuring unit is designed to measure the dielectric constant (DC) in that the measuring unit

- detects an extreme value ($M_{min}$) of the measuring curve ($E'_{HF}$) that corresponds approximately to a predefined minimum level ($L_{min}$),
- determines a shift of the extreme value ($\Delta M_{min}$) if a
level change ($\Delta L$) is detected, and
- determines the dielectric constant (DC) using the shift of the extreme value ($\Delta M_{min}$) and using the level change ($\Delta L$).

2. Level transmitter as claimed in Claim 1, wherein the evaluation unit is designed to increase the offset ($\Delta h$), particularly in a linear manner, with an increasing dielectric constant (DC).

3. Level transmitter as claimed in one of the previous claims, wherein the reference curve ($R_{HF}$) is implemented in the evaluation unit in the form of a function that decreases with a decreasing level (L).

4. Level transmitter as claimed in one of the previous claims, wherein the reference curve ($R_{HF}$) is implemented in the evaluation unit in the form of a particularly broken rational function type or an exponential function type.

5. Level transmitter as claimed in one of the Claims 1 to 3, wherein the reference curve ($R_{HF}$) is implemented in the evaluation unit in the form of a constant function that is independent of the level (L).

6. Procedure for the radar-based measurement of the level (L) of a medium (3) located in a vessel (2) using a level transmitter (1) as claimed in one of the previous claims,

said procedure comprising the following steps:

- measurement of a dielectric constant (DC) of the medium (3),
- transmission of a radar-based measuring signal ($S_{HF}$) in the direction of the medium (3),
- reception of an echo signal ($E_{HF}$) following the reflection of the transmission signal (SHF),
- creation of a measuring curve ($E'_{HF}$) using at least the echo signal (EHF),
- determination of the level (L) using a maximum ($M_L$) of the measuring curve ($E'_{HF}$), if the maximum ($M_L$) exceeds a predefined reference curve ($R_{HF}$),

wherein an offset ($\Delta h$) and/or a function type of the reference curve ($R_{HF}$) is set as a function of the measured dielectric constant (DC).

**Revendications**

1. Transmetteur de niveau destiné à la mesure basée sur un radar du niveau (L) d'un produit (3) se trouvant dans un réservoir (2), lequel transmetteur comprend les composants suivants :

   - une unité de mesure, laquelle est conçue pour déterminer la valeur diélectrique (DK) du produit (3),
   - une unité de génération de signaux, laquelle est conçue pour injecter un signal de mesure ($S_{HF}$) basé sur un radar (SHF) dans
   - une antenne ou une sonde (11), l'antenne ou la sonde (11) pouvant être orientée de telle sorte que le signal de mesure ($S_{HF}$) soit émis en direction du produit (3), et
   - une unité d'exploitation, laquelle est conçue pour

      ∘ recevoir, après réflexion du signal d'émission ($S_{HF}$), un signal d'écho ($E_{HF}$) via l'antenne ou la sonde (11),
      ∘ créer une courbe de mesure ($E'_{HF}$) à l'aide d'au moins le signal d'écho (EHF),
      ∘ déterminer le niveau (L) à l'aide d'un maximum ($M_L$) de la courbe de mesure ($E'_{HF}$), dans la mesure où le maximum ($M_L$) dépasse la valeur correspondante d'une courbe de référence prédéfinie ($R_{HF}$), et
      ∘ régler un décalage ($\Delta h$) et/ou un type de fonction de la courbe de référence ($R_{HF}$) en fonction de la valeur diélectrique (DK) mesurée,

   l'unité de mesure étant conçue pour mesurer la valeur diélectrique (DK) en ce que l'unité de mesure

   - détecte une valeur extrême ($M_{min}$) de la courbe de mesure ($E'_{HF}$) qui correspond approximativement à un niveau minimal ($L_{min}$) prédéfini,
   - détermine un décalage de la valeur extrême ($\Delta M_{min}$), dans la mesure où une variation du niveau ($\Delta L$) est détectée, et
   - détermine la valeur diélectrique (DK) à l'aide du décalage de la valeur extrême ($\Delta M_{min}$) et à l'aide de la variation du niveau ($\Delta L$).

2. Transmetteur selon la revendication 1, pour lequel l'unité d'exploitation est conçue pour augmenter le décalage ($\Delta h$), notamment de manière linéaire, lorsque la valeur diélectrique (DK) augmente.

3. Transmetteur selon l'une des revendications précédentes, pour lequel la courbe de référence ($R_{HF}$) est implémentée dans l'unité d'exploitation sous la forme d'une fonction décroissante avec un niveau (L) décroissant.

4. Transmetteur selon l'une des revendications précédentes, pour lequel la courbe de référence ($R_{HF}$) est implémentée dans l'unité d'exploitation sous la forme d'un type de fonction notamment rationnel fractionnaire ou d'un type de fonction exponentiel.

5. Transmetteur selon l'une des revendications 1 à 3, pour lequel la courbe de référence ($R_{HF}$) est implémentée dans l'unité d'exploitation sous la forme d'une fonction constante indépendamment du niveau (L).

6. Procédé destiné à la mesure basée sur un radar du niveau (L) d'un produit (3) se trouvant dans un réservoir (2) au moyen d'un transmetteur (1) selon l'une des revendications précédentes,

   lequel procédé comprend les étapes suivantes :

   - Mesure d'une valeur diélectrique (DK) du produit (3),
   - Émission d'un signal de mesure basé sur un radar ($S_{HF}$) en direction du produit (3),
   - Réception d'un signal d'écho ($E_{HF}$) après réflexion du signal d'émission (SHF),
   - Création d'une courbe de mesure ($E'_{HF}$) à l'aide d'au moins le signal d'écho (EHF),
   - Détermination du niveau (L) à l'aide d'un maximum ($M_L$) de la courbe de mesure ($E'_{HF}$), dans la mesure où le maximum ($M_L$) dépasse une courbe de référence prédéfinie ($R_{HF}$),

   un décalage ($\Delta h$) et/ou un type de fonction de la courbe de référence ($R_{HF}$) étant réglé en fonction de la valeur diélectrique (DK) mesurée.

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012104858 A1
- DE 102013108490 A1

- US 2015192449 A1